# EUROPEAN PATENT APPLICATION

(11) **EP 4 407 753 A1**
(43) Date of publication of application: **31.07.2024**
(21) Application number: 23861643.7
(22) Date of filing: 26.04.2023
(51) Int. Cl.: H01M 10/617, H01M 10/6551, H01M 50/289, H01M 50/284

(54) **BATTERY DEVICE**

(30) Priority: 14.12.2022 KR 20220175068
(71) Applicant: LG ENERGY SOLUTION, LTD., Seoul 07335 (KR)
(72) Inventor: HO, Kung-Han, Taipei City 11494 (TW)
(74) Representative: Goddar, Heinz J.
(86) International application number: PCT/KR2023/005689
(87) International publication number: WO 2024/128431

(57) **Abstract**

Disclosed is a battery device, which includes a battery module and a printing layer. The battery module includes a frame and a plurality of battery cells disposed within the frame. The frame has a plurality of heat dissipation slots spaced apart from each other to transfer heat generated in at least one of the battery cells to the outside of the frame so that the battery cells reach thermal balance. The printing layer covers the frame of the battery module and directly contacts the heat dissipation slots.

## Description

### TECHNICAL FIELD

The present disclosure relates to an electronic device, more particularly, to a battery device. The present application claims priority to Korean Patent Application No. 10-2022-0175068 filed on December 14, 2022 in the Republic of Korea, the disclosures of which are incorporated herein by reference.

### BACKGROUND ART

Portable electronic products (e.g., notebooks) include a battery device to provide necessary power. The battery device includes a plurality of battery cells, and each battery cell generates heat during charging and discharging, so that the temperature rises. However, battery cells in an overheated state are easily consumed or have a potential risk of explosion, which affects the life span of the battery cell.

### DISCLOSURE

### Technical Problem

The present disclosure is directed to providing a battery device capable of effectively extending the cycle life of battery cells by forming thermal balance between the battery cells.

### Technical Solution

In one aspect of the present disclosure, there is provided a battery device, which includes a battery module and a printing layer. The battery module includes a frame and a plurality of battery cells disposed within the frame. The frame has a plurality of heat dissipation slots spaced apart from each other to transfer heat generated in at least one of the battery cells to the outside of the frame so that the battery cells reach thermal balance. The printing layer covers the frame of the battery module and directly contacts the heat dissipation slots.

In an embodiment of the present disclosure, the battery cells may include at least one first battery cell and at least one second battery cell, and the temperature generated in the at least one first battery cell may be higher than the temperature generated in at least one second battery cell.

In an embodiment of the present disclosure, the heat dissipation slots may be installed to correspond to the position of the at least one first battery cell.

In an embodiment of the present disclosure, each of the heat dissipation slots may extend from a side of the frame toward a bottom surface to form an L shape.

In an embodiment of the present disclosure, the frame may have a thickness of 0.7 mm.

In an embodiment of the present disclosure, each heat dissipation slot may have an aspect ratio greater than 1 and equal to or less than 2.5.

In an embodiment of the present disclosure, the battery module may further include a plurality of separation plates located within the frame to divide the frame into a plurality of accommodation areas, and the battery cells may be located within the accommodation areas, respectively.

In an embodiment of the present disclosure, the battery device may further comprise a printed board disposed on the frame of the battery module and electrically connected to the battery cell, and a protection plate disposed on the frame to cover the printed board.

In an embodiment of the present disclosure, the battery device may further comprise a protection layer, and the battery module may be located between the printing layer and the protection layer.

In an embodiment of the present disclosure, each battery cell may include a soft pack battery cell.

### Advantageous Effects

According to the above, in the design of the battery device according to the present disclosure, the frame has a heat dissipation slot to transmit heat generated in at least one battery cell to the outside of the frame, thereby lowering the temperature of the battery cell to reach thermal balance between the battery cells. In other words, by installing the heat dissipation slot, heat dissipation is performed in a heat convection method and the heat dissipation area is increased, so that the battery cells reach the same or similar temperatures to effectively extend the cycle life of the battery cells.

### DESCRIPTION OF DRAWINGS

FIG. 1a is a three-dimensional exploded perspective view showing a battery device according to an embodiment of the present disclosure.
FIG. 1b is a local three-dimensional cross-sectional perspective view showing the battery device in FIG. 1a.
FIG. 1c is a local three-dimensional cross-sectional perspective view, observed in a direction different from of FIG. 1b.
FIG. 1d is a local three-dimensional cross-sectional perspective view showing a frame in FIG. 1a.
FIG. 2 is a three-dimensional exploded perspective view showing a battery device according to another embodiment of the present disclosure.

### BEST MODE

In order to understand the features and advantages of the present disclosure more clearly and easily, a detailed description is provided in conjunction with the drawings through the following embodiment.

The present disclosure can be understood by referring to the following detailed description and the accompanying drawings, and it should be noted that for easy understanding of the present disclosure and conciseness of the drawings, the structures in the drawings are not drawn to scale. In addition, the quantity and size of each component in the drawing is only an example and does not limit the present disclosure.

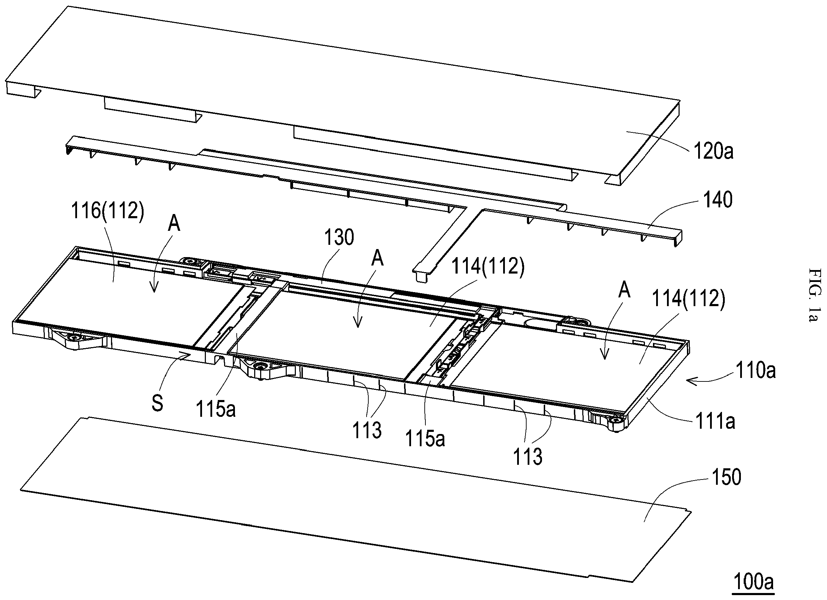

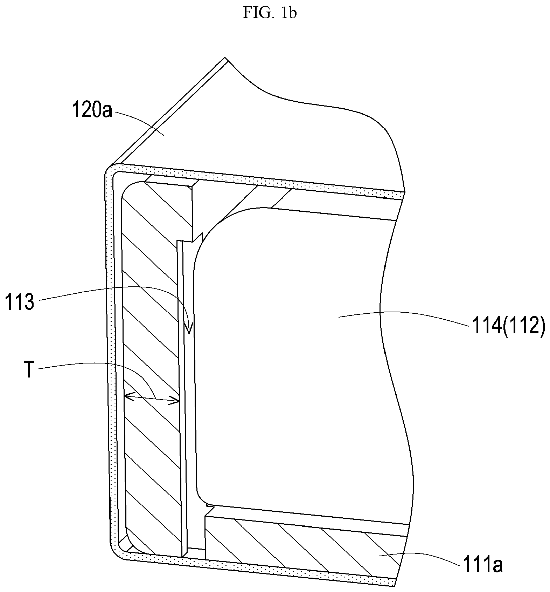

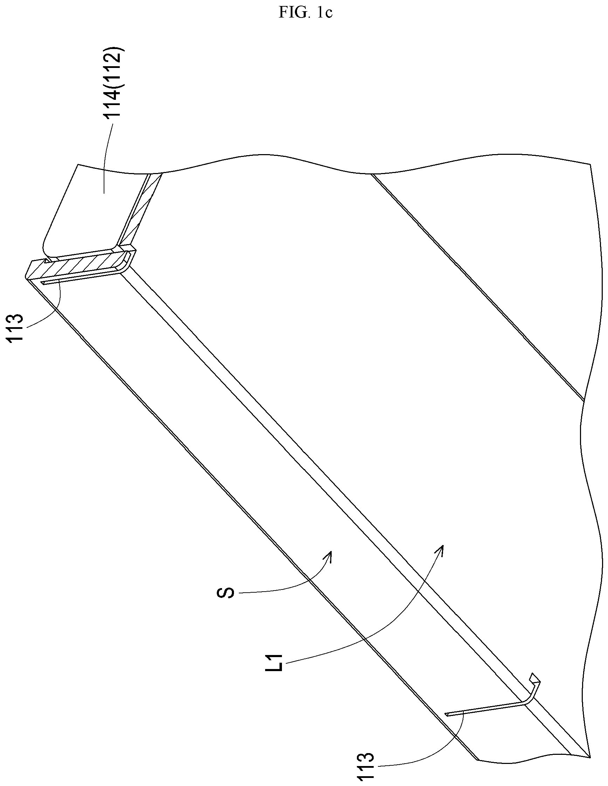

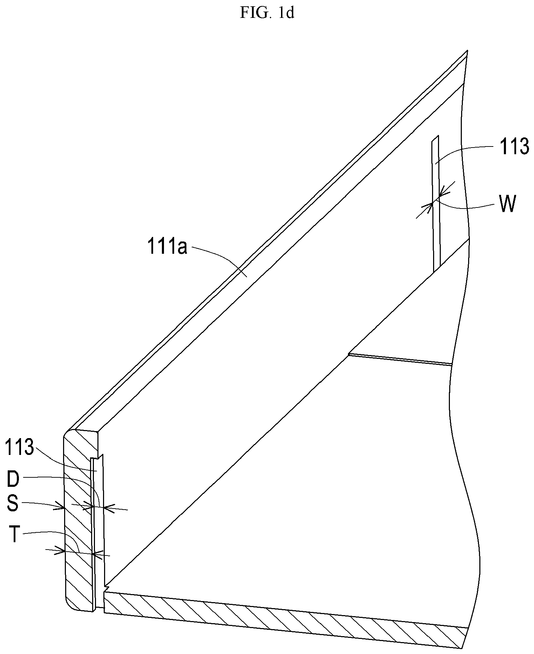

FIG. 1a is a three-dimensional exploded perspective view showing a battery device according to an embodiment of the present disclosure. FIG. 1b is a local three-dimensional cross-sectional perspective view showing the battery device in FIG. 1a. FIG. 1c is a local three-dimensional cross-sectional perspective view, observed in a direction different from of FIG. 1b. FIG. 1d is a local three-dimensional cross-sectional perspective view showing a frame in FIG. 1a. For convenience of description, the printing layer of FIG. 1b is not depicted in FIG. 1c.

Referring to FIG. 1a, in this embodiment, a battery device 100a is a battery device used in, for example, a notebook computer or other types of electronic products, and includes a battery module 110a and a printing layer 120a. The battery module 110a includes a frame 111a and a plurality of battery cells (three battery cells 112 are shown as an example) disposed within the frame 111a. The frame 111a includes a plurality of heat dissipation slots 113 spaced apart from each other to transfer heat generated in at least one battery cell 112 to the outside of the frame 111a so that the battery cell 112 reaches thermal balance. The printing layer 120a covers the frame 111a of the battery module 110a and directly contacts the heat dissipation slot 113.

In detail, in this embodiment, the battery module 110a also includes a plurality of separation plates 115a, and the separation plates 115a are located within the frame 111a to divide the frame 111a into a plurality of accommodation areas (e.g., three accommodation areas A), and each battery cell 112 is located within the accommodation area A. In one embodiment, the battery cell 112 may be a soft pack battery cell, but is not limited thereto. In addition, the battery cell 112 according to this embodiment includes at least one first battery cell (two first battery cells 114 are shown as an example) and at least one second battery cell (one second battery cell 116 are shown as an example), and the temperature generated when the first battery cell 114 is charged and discharged is higher than the temperature generated when the second battery cell 116 is charged and discharged.

Referring to FIGS. 1b, 1c, and 1d together, in this embodiment, the heat dissipation slot 113 is a slot hole passing through the frame 111a, and the heat dissipation slot 113 extends from the side S of the frame 111a to the bottom surface U to form a L shape. That is, the airflow within the frame 111a is transferred to the outside of the frame 111a through the heat dissipation slot 113. As shown in FIGS. 1a and 1b, the heat dissipation slot 113 according to this embodiment is installed to correspond to the position of the first battery cell 114 and is installed in the side S of the frame 111a. Here, the first battery cell 114 located within the frame 111a directly contacts the heat dissipation slot 113. Since the heat dissipation slot 113 communicates the printing layer 120 and the inside of the frame 111a, the heat of the first battery cell 114 is transferred to the printing layer 120 in a heat convection method.

In short, the heat dissipation slot 113 according to this embodiment is installed to correspond to the first battery cell 114 having a high temperature, and the heat dissipation slot 113 is not installed around the second battery cell 116 having a low temperature. Therefore, the heat dissipation slot 113 transfers the heat generated in the first battery cell 114 to the outside of the frame 111a in a thermal convection method, thereby lowering the temperature of the first battery cell 114 (e.g., by 2.35°C), so that the temperature of the first battery cell 114 reaches thermal balance with the temperature of the second the battery cell 116.

Referring to FIGS. 1b to 1d again, in one embodiment, the thickness T of the frame 111a is, for example, 0.7 mm, and the ratio of width and depth (aspect ratio) of each heat dissipation slot 113 is greater than 1 and equal to or less than 2.5. In one embodiment, the depth D of each heat dissipation slot 113 is, for example, 0.2 mm, and the width W of each heat dissipation slot 113 is, for example, 0.5 mm. In this embodiment, the heat dissipation slot 113 is installed only in the side S of the frame 111a, but in other embodiments, the heat dissipation slot 113 may be installed in two or three sides of the battery cell 112 corresponding to the heat dissipation demand, which also falls within the scope of protection of the present disclosure.

Also, referring to FIG. 1a again, the battery device 100a according to this embodiment includes a printed board 130 and a protection plate 140. The printed board 130 is disposed on the frame 111a of the battery module 110a and electrically connected to the battery cell 112. The protection plate 140 is disposed on the frame 111a to cover the printed board 130 to protect the printed board 130. In one embodiment, the material of the frame 111a and the material of the protection plate 140 may be plastic. In addition, the battery device 100a includes a protection layer 150, and the battery module 110a is located between the printing layer 120a and the protection layer 150. Here, the protection layer 150 may be a sheet material of a single color, and is disposed on the bottom surface U of the frame 111a to cover the battery module 110a together with the printing layer 120a. The printing layer 120a may include text or images to display information such as a model name of the battery device 100a, and thus the printing layer 120a may be regarded as a label layer.

In short, the frame 111a according to this embodiment has a heat dissipation slot 113, and by installing the heat dissipation slot 113, cooling conditions may be improved and the heat dissipation area of the battery cell 112 may be increased. Also, since the heat generated in the battery cell 112 with a high temperature is transferred to the outside of the frame 111a in a heat convection method, the temperature of the corresponding battery cell 112 is lowered so that the battery cells 112 reach thermal balance. Therefore, the temperatures of the battery cells 112 of the battery device 100a according to this embodiment becomes the same or similar, so that the cycle life of the battery cell 112 may be effectively extended. In addition, by installing the heat dissipation slot 113 on the frame 111a, the heat dissipation control system of the battery device 100a may be simplified and the use of insulation materials may be reduced.

Here, it should be noted that the following embodiment follows the reference signs and some contents of the former embodiment, and it should be noted that the same reference signs denote the same or similar components and the same technical features will not be described again. For the features not described below, reference may be made to the former embodiment, and the corresponding features will not be described again in the following embodiment.

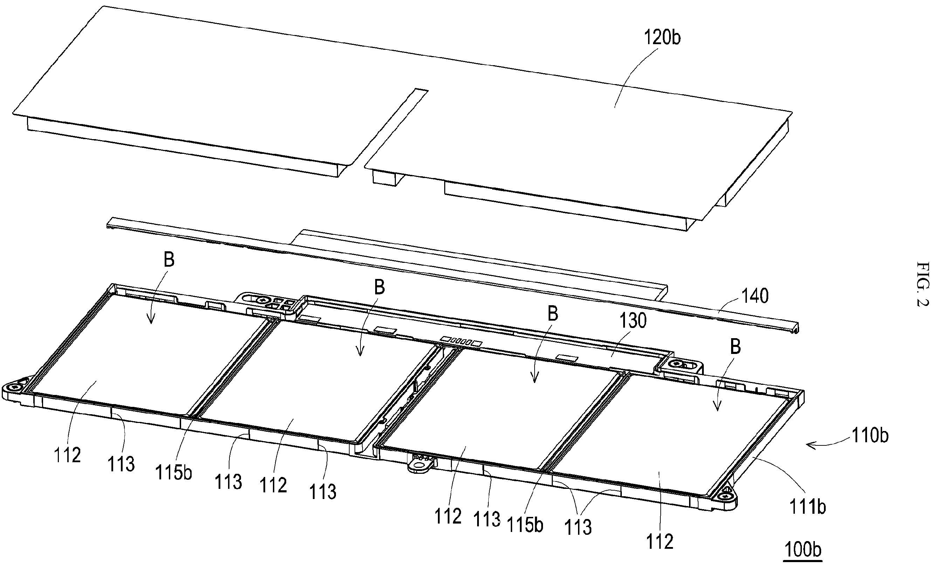

FIG. 2 is a three-dimensional exploded perspective view showing a battery device according to another embodiment of the present disclosure. Referring to FIGS. 1a and 2 together, the battery device 100b according to this embodiment is similar to the battery device 100a in FIG. 1a, except that, in this embodiment, the frame 11 1b of the battery module 110b is divided into four accommodation spaces B by a separation plate 115b, and four battery cells 112 are located in the accommodation spaces B, respectively. Here, the heat dissipation slot 113 is installed to correspond to each battery cell 112. Also, since the battery cell 112 having a high temperature corresponds to the plurality of heat dissipation slots 113, the battery cells 112 reach thermal balance, and the cycle life of the battery cells 112 may be effectively extended. The number of installed heat dissipation slots 113 may be determined according to the heat dissipation demand of the battery cells 112 and the length of the frame 111b. Here, the battery cell 112 having a high temperature may have heat dissipation slots 113 installed with a large number and high density.

As described above, in the design of the battery device according to the present disclosure, the frame has a heat dissipation slot to transfer heat generated in at least one battery cell to the outside of the frame, thereby lowering the temperature of the battery cell so that the battery cells reach thermal balance. In other words, by installing a heat dissipation slot, heat dissipation is performed in a heat convection method and the heat dissipation area is increased, so that the battery cells reaches the same or similar temperatures, thereby effectively extending the cycle life of the battery cells.

The present disclosure has been described through the embodiment as described above, but is not limited thereto, and appropriate changes and modifications can be made by those skilled in the art within the range that does not deviate from the purpose of the present disclosure, and the scope of protection of the present disclosure shall be based on the appended claims.

### Reference Signs

100a, 100b: battery device
110a, 110b: battery module
111a, 111b: frame
112: battery cell
113: heat dissipation slot
114: first battery cell
115a, 115b: separation plate
116: second battery cell
120a, 120b: printing layer
130: printed board
140: protection plate
150: protection layer
A: accommodation area
D: depth
L: width
S: side
T: thickness
U: bottom surface
W: slot width

## Claims

1. A battery device, comprising:
a battery module including a frame and a plurality of battery cells disposed within the frame, the frame having a plurality of heat dissipation slots spaced apart from each other to transfer heat generated in at least one of the battery cells to the outside of the frame so that the battery cells reach thermal balance, and
a printing layer configured to cover the frame of the battery module and directly connected to the heat dissipation slots.

2. The battery device according to claim 1,
wherein the battery cells include at least one first battery cell and at least one second battery cell, and the temperature generated in the at least one first battery cell is higher than the temperature generated in at least one second battery cell.

3. The battery device according to claim 2,
wherein the heat dissipation slots are installed to correspond to the position of the at least one first battery cell.

4. The battery device according to claim 1,
wherein each of the heat dissipation slots extends from a side of the frame toward a bottom surface to form an L shape.

5. The battery device according to claim 1,
wherein the frame has a thickness of 0.7 mm.

6. The battery device according to claim 5,
wherein each heat dissipation slot has an aspect ratio greater than 1 and equal to or less than 2.5.

7. The battery device according to claim 1,
wherein the battery module further includes a plurality of separation plates located within the frame to divide the frame into a plurality of accommodation areas, and the battery cells are located within the accommodation areas, respectively.

8. The battery device according to claim 1, further comprising:
a printed board disposed on the frame of the battery module and electrically connected to the battery cell, and
a protection plate disposed on the frame to cover the printed board.

9. The battery device according to claim 1, further comprising a protection layer,
wherein the battery module is located between the printing layer and the protection layer.

10. The battery device according to claim 1,
wherein each battery cell includes a soft pack battery cell.
